(19) **Europäisches Patentamt / European Patent Office / Office européen des brevets**

(11) **EP 4 467 483 A1**

(12) **EUROPEAN PATENT APPLICATION**
published in accordance with Art. 153(4) EPC

(43) Date of publication:
**27.11.2024 Bulletin 2024/48**

(21) Application number: **22922235.1**

(22) Date of filing: **28.12.2022**

(51) International Patent Classification (IPC):
**B65D 77/00** (2006.01)   **B32B 5/24** (2006.01)

(52) Cooperative Patent Classification (CPC):
**B32B 5/24; B65D 77/00;** Y02W 90/10

(86) International application number:
**PCT/JP2022/048496**

(87) International publication number:
**WO 2023/140085 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.01.2022 JP 2022006052**

(71) Applicant: **Ohki Co., Ltd.**
**Osaka 541-0058 (JP)**

(72) Inventors:
• **SAITOH, Mitsunori**
**Osaka-shi, Osaka 541-0058 (JP)**
• **MURAOKA, Shinya**
**Osaka-shi, Osaka 541-0058 (JP)**
• **YAMAGUCHI, Naoko**
**Osaka-shi, Osaka 541-0058 (JP)**

(74) Representative: **Cabinet Beau de Loménie**
**158, rue de l'Université**
**75340 Paris Cedex 07 (FR)**

(54) **EXTRACTION BAG, EXTRACTION BAG MANUFACTURING METHOD, SHEET FOR EXTRACTION BAG, AND METHOD FOR MANUFACTURING SHEET FOR EXTRACTION BAG**

(57) Provided is an extraction bag in which an accessory member can be appropriately joined to a sheet constituting the extraction bag, even in a case where biodegradable polylactic acid resins are adopted as a resin for a nonwoven fabric for use in the sheet and as a resin for a laminate for use in the accessory member of the extraction bag, without damaging the nonwoven fabric side. An extraction bag 100 including a spunbond nonwoven fabric layer 10 containing a polylactic acid resin and an accessory member 20 which are joined, wherein a laminate layer 21 containing a polylactic acid resin is provided on at least a surface of the accessory member 20 in contact with the spunbond nonwoven fabric layer 10, and wherein a degree of crystallinity of the polylactic acid resin contained in the laminate layer 21 is set to be smaller than a degree of crystallinity of the polylactic acid resin contained in the spunbond nonwoven fabric layer 10.

FIG. 1

**Description**

TECHNICAL FIELD

The present invention relates to an extraction bag including a spunbond nonwoven fabric layer containing a polylactic acid resin and an accessory member, with the fabric layer and the accessory member being joined together. The present invention also relates to a method for manufacturing the extraction bag, a sheet for the extraction bag, and a method for manufacturing the sheet for the extraction bag.

BACKGROUND ART

As sheets for constituting extraction bags for extracting coffee, black tea, soup broth, etc., sheets using biodegradable materials for reducing environmental load at the time of disposal after use have been developed (e.g., see Patent Documents 1 and 2).

The sheet material for coffee extraction described in Patent Document 1 is formed of a melt-blown microfine fiber nonwoven fabric made of a biodegradable thermoplastic polymer. Examples of said document describe drip-type coffee filters formed by using a melt-blown nonwoven fabric made of polylactic acid microfine fibers.

The sheet for extraction described in Patent Document 2 is a laminate of a melt-blown nonwoven fabric layer and a spunbond nonwoven fabric layer which are both made of polylactic acid-based resins. Fig. 2 of said document describes a tea bag including a bag body formed by using this sheet for extraction, and a tag for picking up the tea bag with fingertips which is bonded to the surface of the bag.

The sheets for extraction described in the above-mentioned Patent Documents 1 and 2 can reduce environmental load because even the sheets for extraction are buried in the ground after use in a state that a matter that has subjected to extraction is housed in the bag, the sheets for extraction are decomposed by microorganisms together with the matter.

CITATION LIST

PATENT LITERATURE

Patent Document 1: Japanese Unexamined Patent Application Publication No. 2000-336570
Patent Document 2: Japanese Unexamined Patent Application Publication No. 2016-168569

SUMMARY OF INVENTION

TECHNICAL PROBLEM

In order to reduce environmental load in an extraction bag, it is desired that biodegradable materials are used not only in a sheet but also in all accessory members. As such biodegradable materials, there are various materials such as polylactic acids, polyhydroxyalkanoates and polybutylene succinates, but it is preferable to use polylactic acid resins of identical materials so that all members have similar decomposition properties. Here, part of existing polylactic acid resins are those having different melting points, but general-purpose materials have approximately identical melting points. Therefore, if polylactic acid resins of identical materials are adopted as a resin for use in a nonwoven fabric of an extraction bag and as a resin for use in a laminate of an accessory member, then there is a concern that the fibers forming the nonwoven fabric are damaged when heated for the purpose of attachment.

In this regard, in the sheet material for extraction of coffee described in Patent Document 1, when the sheet is made brittle due to a damage by heat, there is a concern that the filter peels and drops off from a latch part, which is an accessory member, due to a load during coffee extraction. In the sheet for extraction described in Patent Document 2, if the adhesion force of the tag to the bag body is too strong, there is a concern that the sheet gets a hole when the tag is peeled off the bag body. On the other hand, if the adhesion force of the tag to the bag body is too weak, the tag drops off from the bag body during filling the bag body with a matter to be extracted, which may cause manufacturing failure.

The present invention has been made in view of the above-mentioned problem, and aims to provide an extraction bag in which an accessory member can be appropriately joined to a sheet constituting the extraction bag, even in a case where biodegradable polylactic acid resins are adopted as a resin for a nonwoven fabric for use in the sheet and a resin for a laminate for use in the accessory member of said extraction bag, without damaging the nonwoven fabric side. In addition, the present invention also aims to provide a method for manufacturing the extraction bag, a sheet for the extraction bag, and a method for manufacturing the sheet for the extraction bag.

SOLUTION TO PROBLEM

The characteristic constitution of the extraction bag according to the present invention for solving the above-mentioned problem is:

an extraction bag including a spunbond nonwoven fabric layer containing a polylactic acid resin and an accessory member, the fabric layer and the accessory member being joined together,
wherein a laminate layer containing a polylactic acid resin is provided on at least a surface of the accessory member in contact with the spunbond nonwoven fabric layer, and
a degree of crystallinity of the polylactic acid resin contained in the laminate layer is set to be smaller than a degree of crystallinity of the polylactic acid resin contained in the spunbond nonwoven fabric layer.

According to the extraction bag of this constitution, since the degree of crystallinity of the polylactic acid resin contained in the laminate layer of the accessory member is set to be smaller than the degree of crystallinity of the polylactic acid resin contained in the spunbond nonwoven fabric layer, during heating for joining, the accessory member can be integrated with the spunbond nonwoven fabric layer by allowing only the polylactic acid resin contained in the laminate layer of the accessory member to be softened and allowing the softened laminate layer to cut into the gaps of the fibers of the spunbond nonwoven fabric layer. At this time, the polylactic acid resin contained in the spunbond nonwoven fabric layer has not been softened yet at the temperature at which the polylactic acid resin contained in the laminate layer is softened, and thus the spunbond nonwoven fabric layer can maintain the function as a filter without being damaged. Furthermore, since the adhesion force between the spunbond nonwoven fabric layer and the accessory member is appropriately controlled, there is no concern of damaging the spunbond nonwoven fabric layer even in a case where the accessory member is peeled off the spunbond nonwoven fabric layer.
In the extraction bag according to the present invention,
it is preferable that a difference between the degree of crystallinity of the polylactic acid resin contained in the laminate layer and the degree of crystallinity of the polylactic acid resin contained in the spunbond nonwoven fabric layer is set to 10% or more.
According to the extraction bag of this constitution, since the difference between the degree of crystallinity of the polylactic acid resin contained in the laminate layer and the degree of crystallinity of the polylactic acid resin contained in the spunbond nonwoven fabric layer is set to 10% or more, only the polylactic acid resin contained in the laminate layer having a low degree of crystallinity is softened, and the softened laminate layer cut into the gaps of the fibers of the spunbond nonwoven fabric layer, and thus the layers can be joined firmly and integrated. At this time, the polylactic acid resin contained in the spunbond nonwoven fabric layer has a degree of crystallinity that is 10% or more higher than that of the polylactic acid resin contained in the laminate layer and thus has not been softened yet at the temperature at which the polylactic acid resin contained in the laminate layer is softened and the structure of the spunbond nonwoven fabric layer is retained. Therefore, the spunbond nonwoven fabric layer can maintain the function as a filter without being damaged.
In the extraction bag according to the present invention,
it is preferable that a melt-blown nonwoven fabric layer containing a polylactic acid resin is provided on the spunbond nonwoven fabric layer.
According to the extraction bag of this constitution, since the melt-blown nonwoven fabric layer containing a polylactic acid resin is provided on the spunbond nonwoven fabric layer, an excellent function as a filter can be imparted by the laminate structure of the spunbond nonwoven fabric layer and the melt-blown nonwoven fabric layer while reducing environmental load as an entirety of the extraction bag.
The characteristic constitution of the method for manufacturing the extraction bag according to the present invention for solving the above-mentioned problem is:

a method for manufacturing an extraction bag including a spunbond nonwoven fabric layer containing a polylactic acid resin and an accessory member, the fabric layer and the accessory member being joined together,
wherein a laminate layer containing a polylactic acid resin is provided on at least a surface of the accessory member in contact with the spunbond nonwoven fabric layer, and
a degree of crystallinity of the polylactic acid resin contained in the laminate layer is set to be smaller than a degree of crystallinity of the polylactic acid resin contained in the spunbond nonwoven fabric layer, and
wherein the method includes conducting a heating step at a temperature that is 30 to 100°C higher than glass transition temperature Tg of the polylactic acid resin when joining the spunbond nonwoven fabric layer and the accessory member.

According to the method for manufacturing the extraction bag of this constitution, since the degree of crystallinity of the polylactic acid resin contained in the laminate layer is set to be smaller than the degree of crystallinity of the polylactic acid resin contained in the spunbond nonwoven fabric layer, during the joining of the spunbond nonwoven fabric layer and the accessory member, the accessory member can be integrated with the spunbond nonwoven fabric layer by conducting the heating step for imparting a temperature that is 30 to 100°C higher than the glass transition temperature Tg of the polylactic acid resin to allow only the polylactic acid resin contained in the laminate layer of the accessory member to be softened and allow the softened laminate layer to cut into the gaps of the fibers of the spunbond nonwoven fabric layer. At this time, the polylactic acid resin contained in the spunbond nonwoven fabric layer has not been softened yet at the temperature at which the polylactic acid resin contained in the laminate layer is softened, and thus the spunbond nonwoven fabric layer can maintain the function as a filter without being damaged. Furthermore, since the adhesion force between the spunbond nonwoven fabric layer and the accessory member is appropriately controlled, there is no concern of damaging the spunbond nonwoven fabric layer even in a case where the accessory member is peeled off the spunbond nonwoven fabric layer.

The characteristic constitution of the sheet for the extraction bag according to the present invention for solving the above-mentioned problem is:

a sheet for an extraction bag including a spunbond nonwoven fabric layer containing a polylactic acid resin and an accessory member, the fabric layer and the accessory member being joined together,
wherein a laminate layer containing a polylactic acid resin is provided on at least a surface of the accessory member in contact with the spunbond nonwoven fabric layer, and
a degree of crystallinity of the polylactic acid resin contained in the laminate layer is set to be smaller than a degree of crystallinity of the polylactic acid resin contained in the spunbond nonwoven fabric layer.

According to the sheet for an extraction bag of this constitution, since the degree of crystallinity of the polylactic acid resin contained in the laminate layer of the accessory member is set to be smaller than the degree of crystallinity of the polylactic acid resin contained in the spunbond nonwoven fabric layer, during the heating for joining, the accessory member can be integrated with the spunbond nonwoven fabric layer by allowing only the polylactic acid resin contained in the laminate layer of the accessory member to be softened and allowing the softened laminate layer to cut into the gaps of the fibers of the spunbond nonwoven fabric layer. At this time, since the polylactic acid resin contained in the spunbond nonwoven fabric layer has not been softened yet at the temperature at which the polylactic acid resin contained in the laminate layer is softened, the spunbond nonwoven fabric layer can maintain the function as a filter without being damaged. Furthermore, since the adhesion force between the spunbond nonwoven fabric layer and the accessory member is appropriately controlled, there is no concern of damaging the spunbond nonwoven fabric layer even in a case where the accessory member is peeled off the spunbond nonwoven fabric layer.

The characteristic constitution of the method for manufacturing the sheet for the extraction bag according to the present invention for solving the above-mentioned problem is:

a method for manufacturing a sheet for an extraction bag including a spunbond nonwoven fabric layer containing a polylactic acid resin and an accessory member, the fabric layer and the accessory member being joined together,
wherein a laminate layer containing a polylactic acid resin is provided on at least a surface of the accessory member in contact with the spunbond nonwoven fabric layer,
a degree of crystallinity of the polylactic acid resin contained in the laminate layer is set to be smaller than a degree of crystallinity of the polylactic acid resin contained in the spunbond nonwoven fabric layer, and
wherein the method includes conducting a heating step at a temperature that is 30 to 100°C higher than glass transition temperature Tg of the polylactic acid resin when joining the spunbond nonwoven fabric layer and the accessory member.

According to the method for manufacturing the sheet for an extraction bag of this constitution, since the degree of crystallinity of the polylactic acid resin contained in the laminate layer of the accessory member is set to be smaller than the degree of crystallinity of the polylactic acid resin contained in the spunbond nonwoven fabric layer, when joining the spunbond nonwoven fabric layer and the accessory member, the accessory member can be integrated with the spunbond nonwoven fabric layer by conducting the heating step for imparting a temperature that is 30 to 100°C higher than the glass transition temperature Tg of the polylactic acid resin to allow only the polylactic acid resin contained in the laminate layer of the accessory member to be softened and allow the softened laminate layer to cut into the gaps of the fibers of the spunbond nonwoven fabric layer. At this time, the polylactic acid resin contained in the spunbond nonwoven fabric layer has not been softened yet at the temperature at which the polylactic acid resin contained in the laminate layer is softened, and thus the spunbond nonwoven fabric layer can maintain the function as a filter without being damaged. Furthermore, since the adhesion force between the spunbond nonwoven fabric layer and the accessory member is appropriately controlled, there is no concern of damaging the spunbond nonwoven fabric layer even in a case where the accessory member is peeled off the spunbond nonwoven fabric layer.

BRIEF DESCRIPTION OF DRAWINGS

Fig. 1 is a cross-sectional view schematically showing the laminate structure of the extraction bag (drip bag) according to the first embodiment of the present invention.
Fig. 2 is a cross-sectional view schematically showing the laminate structure of the extraction bag (drip bag) according to the second embodiment of the present invention.
Fig. 3 is a cross-sectional view schematically showing the laminate structure of the extraction bag (tea bag) according to the third embodiment of the present invention.

DESCRIPTION OF EMBODIMENTS

Hereinafter the embodiments of the extraction bag, and the method for manufacturing the extraction bag, and the sheet for the extraction bag, and the method for manufacturing the sheet for the extraction bag of the present invention are explained in detail. Incidentally, the shape and size relationship of the layer structure of the extraction bag shown in each drawing is appropriately simplified and exaggerated to facilitate the understanding of the invention, and is not necessarily direct reflection of the actual shape and size relationship. Furthermore, the present invention is not construed to be limited to the constitutions explained below.

[Sheet for an extraction bag]

The sheet for an extraction bag of the present invention include, as a basic constitution, a laminate formed by laminating a spunbond nonwoven fabric layer containing a polylactic acid resin and an accessory member. In the accessory member, a material containing a polylactic acid resin is laminated on the surface thereof (at least the surface in contact with the spunbond nonwoven fabric layer). As the methods for lamination, extrusion lamination, dry lamination, heat lamination, wet lamination, etc. are known, but there is no problem even any processing method is used as long as the degree of crystallinity of the polylactic acid resin contained in the laminate layer is smaller than the degree of crystallinity of the polylactic acid resin contained in the spunbond nonwoven fabric layer, as mentioned below. Examples of the attached part include, for example, a latch piece for latching the extraction bag prepared from the sheet for an extraction bag of the present invention to a container such as a cup, a tag with a thread which can be attached to the extraction bag, and a thin plate-like element for moving the extraction bag upward and downward in hot water, etc. A melt-blown nonwoven fabric layer containing a polylactic acid resin is provided on a spunbond nonwoven fabric layer as necessary.

[Extraction bag]

The extraction bag of the present invention is formed by bag-processing the sheet for an extraction bag of the present invention into a bag shape. Examples of the method for bag-processing may include melt-bonding by heat or ultrasonic, joining using an adhesive, sewing using a thread, etc. Hereinafter typical three embodiments according to the extraction bag of the present invention are explained.

<First embodiment>

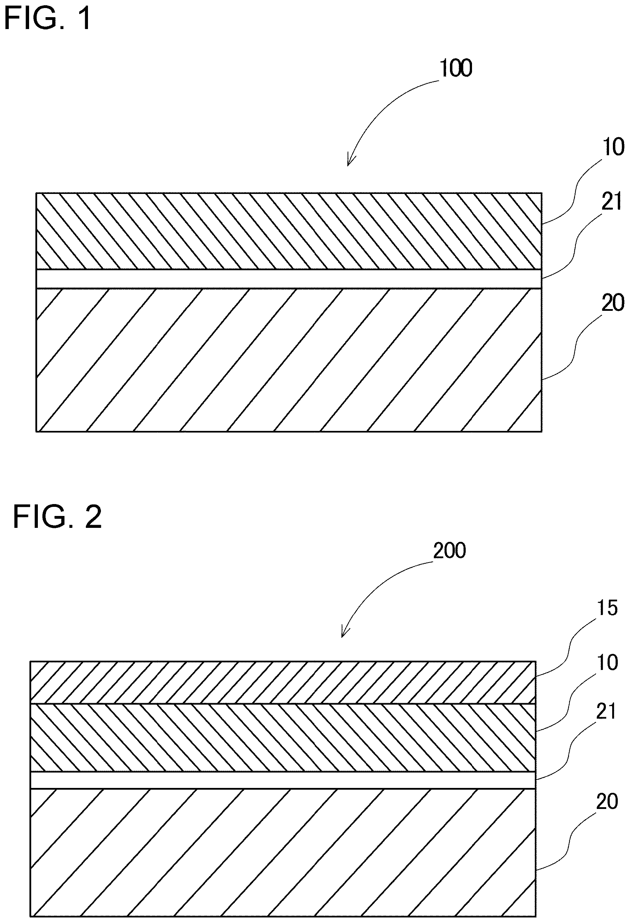

Fig. 1 is a cross-sectional view schematically showing the laminate structure of the extraction bag according to the first embodiment of the present invention. This extraction bag is used as a drip bag 100 including a spunbond nonwoven fabric layer 10 and a paper board 20 as an accessory member, with the fabric layer and the paper board being joined together.

[Spunbond nonwoven fabric layer]

The spunbond nonwoven fabric layer 10 is a layer that functions as a filter for extracting an intended component. The spunbond nonwoven fabric layer 10 is formed by blowing a gas flow at a high-speed to a molten resin extruded from a spinning nozzle to solidify the resin by cooling while the resin is retracted and drawn to form fibers, and collecting these fibers on a collector to form a web. In the drip bag 100 according to the first embodiment, as the resin for constituting the spunbond nonwoven fabric layer 10, a polylactic acid resin, which is a biodegradable resin, is used. The basis weight of the spunbond nonwoven fabric layer 10 is set to preferably 8 to 20 g/m$^2$, more preferably 12 to 20 g/m$^2$.

[Paper board]

The paper board 20 is an element for constituting a latch piece that allows the drip bag 100 to latch onto a container such as a cup. Therefore, it is preferable that the paper board has a basis weight of 150 to 300 g/m$^2$ so as to have stiffness to some degree.

A laminate layer 21, on which a laminate material containing a thermoplastic resin as a main component is applied, is provided on at least a surface of the paper board 20 in contact with the spunbond nonwoven fabric layer 10. In the drip bag 100 according to the first embodiment, as the resin for forming the laminate layer 21, a polylactic acid resin, which is a biodegradable resin, is used in a similar manner to that for the spunbond nonwoven fabric layer 10. The thickness of the laminate layer 21 is set to preferably 20 to 80 $\mu$m, more preferably 40 to 80 $\mu$m.

[Polylactic acid resin]

The drip bag 100 according to the first embodiment includes a paper board 20 that is joined to a spunbond nonwoven fabric layer 10, and the joining of these is conducted by laminating the spunbond nonwoven fabric layer 10 and the paper board 20, and heating the laminate to allow the polylactic acid resin contained in the surface of the laminate layer 21 of the paper board 20 to be softened and allow the softened polylactic acid resin to cut into the gaps of the spunbond nonwoven fabric layer 10. Therefore, in order to finely join the paper board 20 to the spunbond nonwoven fabric layer 10, it is important to grasp the mechanism of the softening of the polylactic acid resin and to join (heat) under an appropriate condition. Here, polylactic acid resins are crystalline polymers in which phase transition is possible between a crystalline phase and an amorphous phase. Similarly to other general polymer materials, the polylactic acid resins have properties that they are gradually softened at a temperature higher than their glass transition temperatures, and they are easily softened when they contain a large amount of amorphous part whereas they are not easily softened in a crystalline state. Furthermore, the higher the degree of crystallinity of a polylactic acid resin is, the higher heat-resistance the polylactic acid resin has.

The present inventors considered that, in joining the paper board 20 on which the laminate layer 21 containing a polylactic acid resin is formed to the spunbond nonwoven fabric layer 10 containing a polylactic acid resin, crystallinities of the polylactic acid resins are deeply involved as a factor that affects the quality of the joining, and found that it becomes possible to join the paper board 20 to the spunbond nonwoven fabric layer 10 without damaging the spunbond nonwoven fabric layer 10 by appropriately setting the relationship between the degree of crystallinity of the polylactic acid resin on the spunbond nonwoven fabric layer 10 side and the degree of crystallinity on the paper board 20 (laminate layer 21) side.

The degree of crystallinity of the polylactic acid resin is obtained as follows. First, a test piece cut out of each of the spunbond nonwoven fabric layer 10 and the laminate layer 21 is set in a differential scanning calorimeter (DSC), and the temperature is raised at a predetermined temperature raising rate from a temperature that is lower than the glass transition temperature Tg of the polylactic acid resin (about 50 to 60°C) to a temperature higher than the melting point Tm (about 150 to 170°C). For example, the temperature is raised from 30°C to 240°C at a temperature raising rate of 10°C/min. In this temperature raising process, the polylactic acid resin is finally put into a molten state since the amorphous part once phase-transfers to a crystalline, and the crystalline is melted when the temperature is further raised. Here, a crystallization heat generation quantity when the amorphous part of the polylactic acid resin phase-transfers to a crystal is defined as $\Delta$Hc, and a crystalline melting heat quantity when the crystal of the polylactic acid resin melts is defined as $\Delta$Hm, the polylactic acid resin has a degree of crystallinity $\chi$C (%), which is calculated from the following formula (1):

$$\chi c\ (\%)\ =\ (\Delta Hm\ -\ \Delta Hc)\ /\ Q\ \times\ 100\ ...\ (1)$$

Incidentally, Q is a melting heat quantity of a complete crystal, and Q = 93 J/g in the case of a polylactic acid resin.

According to the new finding gained by the present inventors, in order to join the paper board 20 to the spunbond nonwoven fabric layer 10 without any problem, it is crucial to set the degree of crystallinity of the polylactic acid resin contained in the laminate layer 21 of the paper board 20 to be smaller than the degree of crystallinity of the polylactic acid resin contained in the spunbond nonwoven fabric layer 10. For example, the degree of crystallinity of the polylactic acid resin contained in the laminate layer 21 is set to 1 to 40%, and the degree of crystallinity of the polylactic acid resin contained in the spunbond nonwoven fabric layer 10 is set to 30 to 60%. Here, it is preferable to set a difference between the degree of crystallinity of the polylactic acid resin contained in the laminate layer 21 and the degree of crystallinity of the polylactic acid resin contained in the spunbond nonwoven fabric layer 10 to 10% or more. In this case, the polylactic acid resin contained in the laminate layer 21 of the paper board 20 is easily softened, and the polylactic acid resin contained in the spunbond nonwoven fabric layer 10 is difficult to be softened. Therefore, when the spunbond nonwoven fabric layer 10 and the paper board 20 are joined by applying a temperature higher than the glass transition temperature Tg of the polylactic acid resin (e.g., Tg + 30°C to 100°C), only the polylactic acid resin having a low degree of crystallinity contained in the laminate layer 21 of the paper board 20 is softened, and the softened laminate layer 21 cuts into the gaps of the fibers of the spunbond nonwoven fabric layer 10, and thus the paper board 20 is firmly joined to and integrated with the spunbond nonwoven fabric layer 10. At this time, the polylactic acid resin contained in the spunbond nonwoven fabric layer 10 has a higher degree of crystallinity than that of the polylactic acid resin contained in the laminate layer 21 and thus has not been softened yet at the temperature at which the polylactic acid resin contained in the laminate layer 21 is softened, and thus the structure of the spunbond nonwoven fabric layer 10 is retained. Thus, by setting the degree of crystallinity of the polylactic acid resin contained in the laminate layer 21 of the paper board 20 to be smaller than the degree of crystallinity of the polylactic acid resin contained in the spunbond nonwoven fabric layer 10 in this way, the spunbond nonwoven fabric layer 10 can maintain the function as a filter without being damaged while enabling joining of the spunbond nonwoven fabric layer 10 and the paper board 20 (the laminate layer 21) using similar kinds of materials (the polylactic acid resins), which have been conventionally considered to be difficult to join. Furthermore, since the drip bag 100 contains the polylactic acid resins as major raw materials, it significantly contributes to reduce environmental load when it is disposed after use.

<Second embodiment>

Fig. 2 is a cross-sectional view schematically showing the extraction bag according to the second embodiment of the present invention. This extraction bag includes a laminate of a spunbond nonwoven fabric layer 10 and a melt-blown nonwoven fabric layer 15, and a paper board 20 joined to this laminate, and is used for a drip bag 200 for coffee. The drip bag 200 according to the second embodiment includes a melt-blown nonwoven fabric layer 15 provided on the spunbond nonwoven fabric layer 10 in the drip bag 100 according to the first embodiment. Accordingly, in the following items, only the melt-blown nonwoven fabric layer 15 is explained, and a detailed explanation is omitted for the similar constitution to the constitution of the drip bag 100 according to the first embodiment.

[Melt-blown nonwoven fabric layer]

The melt-blown nonwoven fabric layer 15 is a layer that functions as an adhesive and also functions to prevent powder leakage of a content during formation of a bag. The melt-blown nonwoven fabric layer 15 is formed by blowing a gas flow at a high temperature and a high speed to a molten resin extruded from a spinning nozzle to draw the molten resin and form the molten resin into fibers while allowing the fiber to scatter, and collecting the fibers on a collector and solidifying the fibers into a sheet shape. In the drip bag 200 according to the second embodiment, as the resin for constituting the melt-blown nonwoven fabric layer 15, a polylactic acid resin, which is a biodegradable resin, is preferably used as in the spunbond nonwoven fabric layer 10. By incorporating polylactic acid resins in all of the nonwoven fabric layers in this way, an excellent function as a filter can be imparted by the laminate structure of the spunbond nonwoven fabric layer 10 and the melt-blown nonwoven fabric layer 15 while reducing environmental load as the entirety of the drip bag 200. The basis weight of the melt-blown nonwoven fabric layer 15 is set to preferably 1 to 10 g/m$^2$, more preferably 6 to 10 g/m$^2$.

The degree of crystallinity of the polylactic acid resin contained in the melt-blown nonwoven fabric layer 15 is not specifically limited, but is known to become smaller than the degree of crystallinity of the polylactic acid resin contained in the spunbond nonwoven fabric layer 10. For example, in the case where the degree of crystallinity of the polylactic acid resin contained in the spunbond nonwoven fabric layer 10 is set to 30 to 60% as mentioned above, the degree of crystallinity of the polylactic acid resin contained in the melt-blown nonwoven fabric layer 15 becomes 20 to 40%. In this case, by folding the laminate of the melt-blown nonwoven fabric layer 15 and the spunbond nonwoven fabric layer 10 so that the melt-blown nonwoven fabric layer 15 comes to inner side and heating the laminate, the melt-blown nonwoven fabric layer 15 functions as an adhesive, which makes the formation of a bag easy.

<Third embodiment>

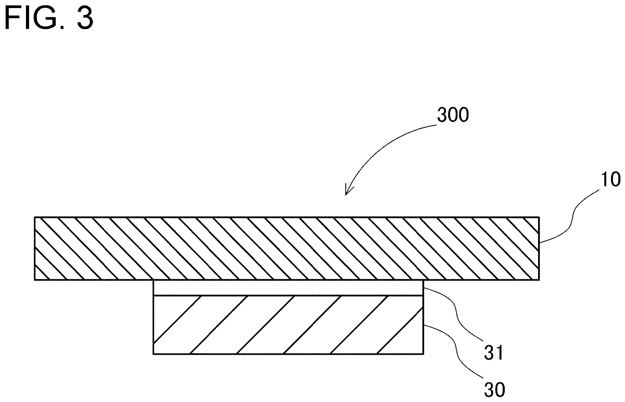

Fig. 3 is a cross-sectional view schematically showing an extraction bag according to the third embodiment of the present invention. This extraction bag is used as a tea bag 300 in which a spunbond nonwoven fabric layer 10 and a tag 30 as an accessory member are joined together. Incidentally, also in this tea bag 300 according to the third embodiment, it is also possible to adopt a constitution in which a melt-blown nonwoven fabric layer 15 is laminated on the spunbond nonwoven fabric layer 10 as in the drip bag 200 according to the second embodiment. The tea bag 300 according to the third embodiment corresponds to the drip bag 100 according to the first embodiment wherein a tag 30 is provided instead of the paper board 20. Therefore, only the tag 30 is explained in the following item, and a detailed description is omitted for a similar constitution to the constitution of the drip bag 100 according to the first embodiment.

[Tag]

The tag 30 is an element that is picked by fingers when the tea bag 300 is hanged with a thread, and is attached to the surface of the bag when the bag is unused and is peeled off the bag during use. The basis weight of the tag is preferably 50 to 150 g/m$^2$.

A laminate layer 31 on which a laminate material containing a thermoplastic resin as a main component is applied onto at least a surface of the tag 30 in contact with the spunbond nonwoven fabric layer 10. In the tea bag 300 according to the third embodiment, as the resin for forming the laminate layer 31, a polylactic acid resin, which is a biodegradable resin, is used as in the spunbond nonwoven fabric layer 10. The thickness of the laminate layer 31 is set to preferably 10 to 80 $\mu$m, more preferably 40 to 80 $\mu$m.

The degree of crystallinity of the polylactic acid resin contained in the laminate layer 31 of the tag 30 is set to be smaller than the degree of crystallinity of the polylactic acid resin contained in the spunbond nonwoven fabric layer 10. For example, the degree of crystallinity of the polylactic acid resin contained in the laminate layer 31 is set to 1 and 20%, and the degree of crystallinity of the polylactic acid resin contained in the spunbond nonwoven fabric layer 10 is set to 30 to 60%. Here, it is preferable that a difference between the degree of crystallinity of the polylactic acid resin contained in the laminate layer 31 and the degree of crystallinity of the polylactic acid resin contained in the spunbond nonwoven fabric layer 10 is set to 10% or more. In this case, the polylactic acid resin contained in the laminate layer 31 of the tag 30 is easily softened, whereas the polylactic acid resin contained in the spunbond nonwoven fabric layer 10 is difficult to be softened, and thus the tag 30 can be attached to the spunbond nonwoven fabric layer 10 at an appropriate adhesion force. As a result, the tag 30 does not drop off when the tea bag 300 is filled with a matter to be extracted, and further, there is no concern of damaging the tea bag 300 when the tag 30 is peeled off the tea bag 300 during use.

[Method for manufacturing extraction bag (sheet for extraction bag)]

The extraction bag (the sheet for the extraction bag) of the present invention can be manufactured by, for example, using heating nip rolls. Incidentally, illustration of the heating nip rolls is omitted since they are conventionally known manufacturing apparatuses.

In the case where the drip bag 100 according to the first embodiment is manufactured, the paper board 20 having the laminate layer 21 formed by extrusion lamination is laminated on the spunbond nonwoven fabric layer 10, and this laminate is passed through a pair of heating nip rolls. In the case where the drip bag 200 according to the second embodiment is manufactured, the melt-blown nonwoven fabric layer 15 is formed on the spunbond nonwoven fabric layer 10, the paper board 20 having the laminate layer 21 formed by extrusion lamination is then laminated on the side of the spunbond nonwoven fabric layer 10, and this laminate is passed through a pair of heating nip rolls. In the case where the tea bag 300 according to the third embodiment is manufactured, the tag 30 having the laminate layer 31 formed by dry lamination is laminated on the spunbond nonwoven fabric layer 10, and this laminate is passed through a pair of heating nip rolls.

Here, by setting the heating temperature by the heating nip rolls to a temperature higher than the glass transition temperature Tg of the polylactic acid resin (e.g., Tg + 30°C to 100°C), for example, in the drip bag 100 according to the first embodiment, when the laminate passes through a pair of heating nip rolls, the polylactic acid resin contained in the laminate layer 21 on the surface of the paper board 20 is softened and cuts into the gaps of the spunbond nonwoven fabric layer 10, whereby the spunbond nonwoven fabric layer 10 and the paper board 20 are integrated and joined together. At this time, since the polylactic acid resin contained in the spunbond nonwoven fabric layer 10 has not been softened yet at the temperature at which the polylactic acid resin contained in the laminate layer 21 is softened, the spunbond nonwoven fabric layer 10 can maintain the function as a filter without being damaged. Also in the drip bag 200 according to the second embodiment, and in the tea bag 300 according to the third embodiment, the spunbond nonwoven fabric layer 10 and the paper board 20 or the tag 30 can be joined together by utilizing a similar phenomenon.

As the pair of heating nip rolls used for the method for manufacturing the extraction bag (the sheet for the extraction bag) of the present invention, two flat rolls can be used in combination, or one may be an emboss roll and the other may be a flat roll.

EXAMPLES

Hereinafter Examples of the extraction bag of the present invention are explained. However, the present invention should not be construed to be limited to the following Examples.

Extraction bags having the characteristic constitution of the present invention (Examples 1 to 14), and extraction bags having no characteristic constitution of the present invention (Comparative Examples 1 and 2) were respectively prepared and evaluated.

[Crystallinity (%)]

A test piece was taken from a nonwoven fabric, and the test piece was set in a differential scanning calorimeter (DSC) (manufactured by TA INSTRUMENTS, product number: 2920MDSC V2.6A). Thereafter, the temperature was raised to 240°C with setting the elevated temperature to 10°C/min, and a crystallization heat generation quantity ΔHc and a crystalline melting heat quantity ΔHm were measured. Then, the degree of crystallinity of the nonwoven fabric was calculated based on the above-mentioned formula (1).

[Basis weight (g/m$^2$)]

Following "JIS L 1913 General Method for Testing Nonwoven Fabric", a test piece of 10 cm square was taken from a nonwoven fabric, the mass was measured, and the basis weight of the nonwoven fabric was calculated.

[Evaluation]

The state of the extraction bag after the heat seal treatment was visually evaluated according to the following criteria.

Fine: The spunbond nonwoven fabric layer has not been damaged, and the paper board has been joined.
Poor: The spunbond nonwoven fabric layer has been damaged, or the paper board has not been joined.

<Example 1>

As shown in Fig. 1, a paper board (basis weight: 200 g/m$^2$) having a laminate layer (thickness: 40 μm) was laminated on a spunbond nonwoven fabric containing a polylactic acid resin having a degree of crystallinity of 50% (basis weight: 15 g/m$^2$), and the laminate was passed through heating nip rolls as a heat seal treatment to prepare the extraction bag of Example 1. The heat seal treatment was conducted at a temperature of 110°C and a pressure of 0.5 MPa for 0.5 sec. The laminate layer was formed by extrusion lamination, in which the polylactic acid resin in a flowing state was extruded onto the paper board. As the polylactic acid resin, a polylactic acid resin having a degree of crystallinity of 3% was used. Incidentally, although the extraction bag of Example 1 was actually a sheet for an extraction bag before being formed into a bag shape, the property itself of the material was not different, and thus the sheet was evaluated as an extraction bag.

<Examples 2 to 14 and Comparative Examples 1 and 2>

The extraction bags of Examples 2 to 14 and Comparative Examples 1 and 2 were prepared in similar manners to that of Example 1, except that they were set to have the constitutions shown in Table 1. Incidentally, in the extraction bags of Examples 9 to 11, as shown in Fig. 2, the melt-blown nonwoven fabric layer was laminated on the spunbond nonwoven fabric layer. Furthermore, in the extraction bags of Examples 13 and 14, and of Comparative Examples 1 and 2, the laminate layer was formed by dry lamination, in which drawn polylactic acid films were joined.
The constitutions of the extraction bags of Examples 1 to 14, and of the extraction bags of Comparative Examples 1 and 2, and the evaluation results are shown in Table 1.

[Table 1]

| | No. | Degree of crystallinity (%) | | | Basis weight (g/m$^2$) | | Thickness of laminate layer ($\mu$m) | Heat seal temperature (°C) | Method for lamination | Evaluation |
|---|---|---|---|---|---|---|---|---|---|---|
| | | SB | MB | Laminated layer | SB | MB | | | | |
| Examples | 1 | 50 | – | 3 | 15 | – | 40 | 110 | Extrusion | Fine |
| | 2 | 30 | – | 3 | 15 | – | 40 | 110 | Extrusion | Fine |
| | 3 | 40 | – | 3 | 15 | – | 40 | 110 | Extrusion | Fine |
| | 4 | 60 | – | 3 | 15 | – | 40 | 110 | Extrusion | Fine |
| | 5 | 50 | – | 3 | 15 | – | 20 | 110 | Extrusion | Fine |
| | 6 | 50 | – | 3 | 15 | – | 80 | 110 | Extrusion | Fine |
| | 7 | 50 | – | 3 | 12 | – | 40 | 110 | Extrusion | Fine |
| | 8 | 50 | – | 3 | 20 | – | 40 | 110 | Extrusion | Fine |
| | 9 | 50 | 20 | 3 | 12 | 6 | 40 | 110 | Extrusion | Fine |
| | 10 | 50 | 30 | 3 | 15 | 7 | 40 | 110 | Extrusion | Fine |
| | 11 | 50 | 40 | 3 | 15 | 10 | 40 | 110 | Extrusion | Fine |
| | 12 | 50 | – | 1 | 15 | – | 40 | 110 | Extrusion | Fine |
| | 13 | 50 | – | 20 | 15 | – | 40 | 130 | Dry | Fine |
| | 14 | 50 | – | 40 | 15 | – | 40 | 130 | Dry | Fine |
| Comparative Examples | 1 | 50 | – | 50 | 15 | – | 40 | 130 | Dry | Poor |
| | 2 | 50 | – | 50 | 15 | – | 40 | 150 | Dry | Poor |

·SB　　　　　： Spunbond nonwoven fabric layer
·MB　　　　　： Melt-blown nonwoven fabric

In all of the extraction bags of Examples 1 to 14, in which the degree of crystallinity of the polylactic acid resin contained in the laminate layer was set to be smaller than the degree of crystallinity of the polylactic acid resin contained in the spunbond nonwoven fabric layer, a heat seal treatment was able to be conducted without damaging the spunbond nonwoven fabric layer. Furthermore, in the extraction bags of Examples 1 to 14, since only the polylactic acid resin contained in the laminate layer of the paper board, which had a low degree of crystallinity, was softened, and the softened laminate layer cut into the gaps of the fibers of the spunbond nonwoven fabric layer, the paper board firmly joined to the spunbond nonwoven fabric layer, and the paper board and the spunbond nonwoven fabric layer were integrated.

On the other hand, in the extraction bag of Comparative Example 1, in which the heat seal temperature was set to 130°C, and the degree of crystallinity of the polylactic acid resin contained in the laminate layer and the degree of crystallinity of the polylactic acid resin contained in the spunbond nonwoven fabric layer were set to be equal (that is, the degree of crystallinity of the polylactic acid resin contained in the laminate layer was not set to be smaller than the degree of crystallinity of the polylactic acid resin contained in the spunbond nonwoven fabric layer), the resin of the laminate layer was not softened, and thus the spunbond nonwoven fabric layer and the paper board were not joined. Furthermore, in the extraction bag of Comparative Example 2, which had a similar constitution to that of the extraction bag of Comparative Example 1 and the heat seal temperature was set to 150°C, the polylactic acid resin of the laminate layer was softened, but the fibers contained in the spunbond nonwoven fabric layer were also softened, and thus the spunbond nonwoven fabric layer was damaged.

INDUSTRIAL APPLICABILITY

The extraction bag, and the sheet for the extraction bag of the present invention can be utilized as drip bags for use in extraction of coffee, and as tea bags for use in extraction of teas, and can also be used as soup broth packs for use in extraction of soup broth of bonito, kombu, etc. Furthermore, the extraction bag, and the method for manufacturing the sheet for the extraction bag of the present invention can be utilized for manufacturing filters for the respective intended applications mentioned above.

REFERENCE SIGNS LIST

| 10 | Spunbond nonwoven fabric layer |
| 15 | Melt-blown nonwoven fabric layer |
| 20 | Paper board (accessory member) |
| 21 | Laminate layer |
| 30 | Tag (accessory member) |
| 31 | Laminate layer |
| 100 | Drip bag (extraction bag) |
| 200 | Drip bag (extraction bag) |
| 300 | Tea bag (extraction bag) |

**Claims**

1.  An extraction bag comprising a spunbond nonwoven fabric layer containing a polylactic acid resin and an accessory member, the fabric layer and the accessory member being joined together,

    wherein a laminate layer containing a polylactic acid resin is provided on at least a surface of the accessory member in contact with the spunbond nonwoven fabric layer, and
    a degree of crystallinity of the polylactic acid resin contained in the laminate layer is set to be smaller than a degree of crystallinity of the polylactic acid resin contained in the spunbond nonwoven fabric layer.

2.  The extraction bag according to claim 1, wherein a difference between the degree of crystallinity of the polylactic acid resin contained in the laminate layer and the degree of crystallinity of the polylactic acid resin contained in the spunbond nonwoven fabric layer is set to 10% or more.

3.  The extraction bag according to claim 1 or 2, wherein a melt-blown nonwoven fabric layer containing a polylactic acid resin is provided on the spunbond nonwoven fabric layer.

4.  A method for manufacturing an extraction bag comprising a spunbond nonwoven fabric layer containing a polylactic acid resin and an accessory member, the fabric layer and the accessory member being joined together,

    wherein a laminate layer containing a polylactic acid resin is provided on at least a surface of the accessory member in contact with the spunbond nonwoven fabric layer, and
    a degree of crystallinity of the polylactic acid resin contained in the laminate layer is set to be smaller than a degree of crystallinity of the polylactic acid resin contained in the spunbond nonwoven fabric layer, the method comprising:
    conducting a heating step at a temperature that is 30 to 100°C higher than glass transition temperature Tg of the polylactic acid resin when joining the spunbond nonwoven fabric layer and the accessory member.

5.  A sheet for an extraction bag comprising a spunbond nonwoven fabric layer containing a polylactic acid resin and an accessory member which are joined,

    wherein a laminate layer containing a polylactic acid resin is provided on at least a surface of the accessory member in contact with the spunbond nonwoven fabric layer, and
    a degree of crystallinity of the polylactic acid resin contained in the laminate layer is set to be smaller than a degree of crystallinity of the polylactic acid resin contained in the spunbond nonwoven fabric layer.

6. A method for manufacturing a sheet for an extraction bag comprising a spunbond nonwoven fabric layer containing a polylactic acid resin and an accessory member which are joined,

wherein a laminate layer containing a polylactic acid resin is provided on at least a surface of the accessory member in contact with the spunbond nonwoven fabric layer,
a degree of crystallinity of the polylactic acid resin contained in the laminate layer is set to be smaller than a degree of crystallinity of the polylactic acid resin contained in the spunbond nonwoven fabric layer, and
wherein the method comprises conducting a heating step at a temperature that is 30 to 100°C higher than glass transition temperature Tg of the polylactic acid resin when joining the spunbond nonwoven fabric layer and the accessory member.

FIG. 1

FIG. 2

FIG. 3

## INTERNATIONAL SEARCH REPORT

| International application No. |
|---|
| **PCT/JP2022/048496** |

### A. CLASSIFICATION OF SUBJECT MATTER

**B65D 77/00**(2006.01)i; **B32B 5/24**(2006.01)i
FI: B65D77/00 F; B32B5/24

According to International Patent Classification (IPC) or to both national classification and IPC

### B. FIELDS SEARCHED

Minimum documentation searched (classification system followed by classification symbols)

B65D77/00; B32B5/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2011-78747 A (DAIKI SHOJI KK) 21 April 2011 (2011-04-21) | 1-6 |
| A | JP 2002-336127 A (MITSUI CHEMICALS INC) 26 November 2002 (2002-11-26) | 1-6 |
| A | JP 2018-86261 A (DAIKI SHOJI KK) 07 June 2018 (2018-06-07) | 1-6 |
| A | WO 2021/210053 A1 (DAIKI SHOJI KK) 21 October 2021 (2021-10-21) | 1-6 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

EP 4 467 483 A1

**INTERNATIONAL SEARCH REPORT**
Information on patent family members

International application No.

**PCT/JP2022/048496**

| Patent document cited in search report | | | Publication date (day/month/year) | Patent family member(s) | Publication date (day/month/year) |
|---|---|---|---|---|---|
| JP | 2011-78747 | A | 21 April 2011 | (Family: none) | |
| JP | 2002-336127 | A | 26 November 2002 | (Family: none) | |
| JP | 2018-86261 | A | 07 June 2018 | (Family: none) | |
| WO | 2021/210053 | A1 | 21 October 2021 | (Family: none) | |

Form PCT/ISA/210 (patent family annex) (January 2015)

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000336570 A

- JP 2016168569 A